# EUROPÄISCHE PATENTANMELDUNG

(11) **EP 0 863 594 A2**
(43) Veröffentlichungstag der Anmeldung: **09.09.1998**
(21) Anmeldenummer: 98102243.7
(22) Anmeldetag: 10.02.1998
(51) Int. Cl.: H02G 3/04

(54) **Elektroinstallationskanal**

(30) Priorität: 06.03.1997 DE 19709195
(71) Anmelder: Albert Ackermann GmbH & Co. KG, 51643 Gummersbach (DE)
(72) Erfinder: Mellies, Nils-Ove, 51674 Wiehl (DE)
(74) Vertreter: Wilhelm & Dauster Patentanwälte European Patent Attorneys

(57) **Zusammenfassung**

Kanalprofil aus mindestens zwei Teilprofilen, von denen jedes eine Seitenwand sowie je ein Teilstück der Rückwand und der Vorderwand aufweist. Durch diese Ausgestaltung genügt es, eine gewisse Anzahl von Teilprofilen auf Lager zu halten, aus denen dann eine Vielzahl von möglichen Kanalquerschnittsprofilen aufgebaut werden kann.

## Beschreibung

Die Erfindung betrifft einen Elektroinstallationskanal, insbesondere einen Wandkanal bestehend aus einem einseitig offenen und durch einen Deckel verschließbaren Kanalprofil mit einem Boden als Rückwand sowie mit Seitenwänden, die mit parallel zum Boden verlaufenden und in Rinnen zum Einsetzen des Deckels endenden Vorderwandteilen versehen sind.

Ein als Wandkanal verwendeter Installationskanal dieser Art ist aus der DE 195 24 381 A1 bekannt. Er ist aus einem einstückigen, in der Art eines C profilierten Blech- oder auch Kunststoffprofil hergestellt. Da in der Praxis je nach Anwendungsfall die Größe solcher Installationskanäle auf die zu verlegenden Kabelmengen abgestimmt sein müssen, ist es daher erforderlich, verschiedene Kanalprofile unterschiedlicher Breite und Aufteilung einzusetzen, die alle für einen eventuellen Einsatz auf Lager gehalten werden, was sehr aufwendig ist.

Der vorliegenden Erfindung liegt die Aufgabe zugrunde, eine Möglichkeit vorzuschlagen, um eine solche Lagerhalterung zu vermeiden.

Mit der Erfindung wird vorgeschlagen, einen Installationskanal der eingangs genannten Art soauszubilden, daß das Kanalprofil aus mindestens zwei Teilprofilen aufgebaut ist, von denen jedes eine Seitenwand sowie je ein Teilstück der Rückwand und der Vorderwand aufweist. Durch diese Ausgestaltung wird es möglich, lediglich wenige Standardteilprofile herzustellen und auf Lager zu halten und dann je nach Bedarf aus diesen Teilprofilen die gewünschte Kanalform zusammenzusetzen.

In Weiterbildung der Erfindung werden dabei die Abmessungen der Rück- und Vorderwandbereiche so gewählt, daß die an den Vorderwandbereichen angeordneten Rinnen beim Zusammenfügen von Teilprofilen immer im gleichen Abstand zueinander liegen, damit ein einheitlicher Deckel aufgesetzt werden kann. Es hat sich gezeigt, daß es für diese Maßnahme ausreichend ist, wenn die Bodenteile der Teilprofile stets um ein bestimmtes gleichbleibendes Maß länger ausgebildet sind, als die Vorderwandteile. Werden dann die Bodenteile mit Verbindungsstreifen gleichbleibender Breite zusammengefügt, dann weisen jeweils auch die an den Vorderwandteilen angeordneten Rinnen von zwei zusammengesetzten Teilprofilen stets den gleichen Abstand auf.

In Weiterbildung der Erfindung kann schließlich zur Bildung besonders breiter Doppelkanäle auch ein T-förmiges Zwischenstück zusätzlich zu den Teilprofilen vorgesehen werden, das auch mit in Rinnen endenden Vorderwandteilen, einer später als Trennwand dienenden Verbindungswand und mit Bodenteilen versehen ist, die sich wiederum mit den Bodenteilen der Teilprofile verbinden lassen.

Die Erfindung ist in der Zeichung anhand von Ausführungsbeispielen gezeigt und wird im folgenden erläutert. Es zeigen:
- Figuren 1 bis 4: Teilprofile von Installationskanälen nach der Erfindung, die unterschiedlich breite Boden- und Vorderwandteile aufweisen,
- Fig. 5: ein Doppel-T-förmiges Zwischenstück zur Bildung von Doppelkanälen,
- Fig. 6: einen aus zwei Teilprofilen und einem Doppel-T-Profil nach Fig. 5 aufgebauten Doppelkanal,
- Fig. 7: einen Wandkanal mit eingesetzter Trennwand,
- Fig. 8: einen Doppelkanal, ähnlich Fig. 6, bei dem jedoch einer der beiden Kanäle im Querschnitt größer als der andere ist,
- Fig. 9: einen breiten Installationskanal mit mittig angeordnetem Deckel,
- Fig. 10: einen breiten Installationskanal mit außermittig angeordnetem Deckel,
- Fig. 11: einen Installationskanal ähnlich Fig. 7, jedoch mit größerer Breite und mittig angeordnetem Deckel,
- Fig. 12: einen Installationskanal ähnlich Fig. 11, jedoch mit außermittig angeordnetem Deckel und mit einer außermittig verlaufenden Trennwand,
- Fig. 13: einen Doppelkanal ähnlich Fig. 6, jedoch mit wesentlich breiteren Einzelkanälen, und
- Fig. 14: einen Dreifachkanal, der ebenfalls aus Teilprofilen nach der Erfindung zusammengesetzt ist.

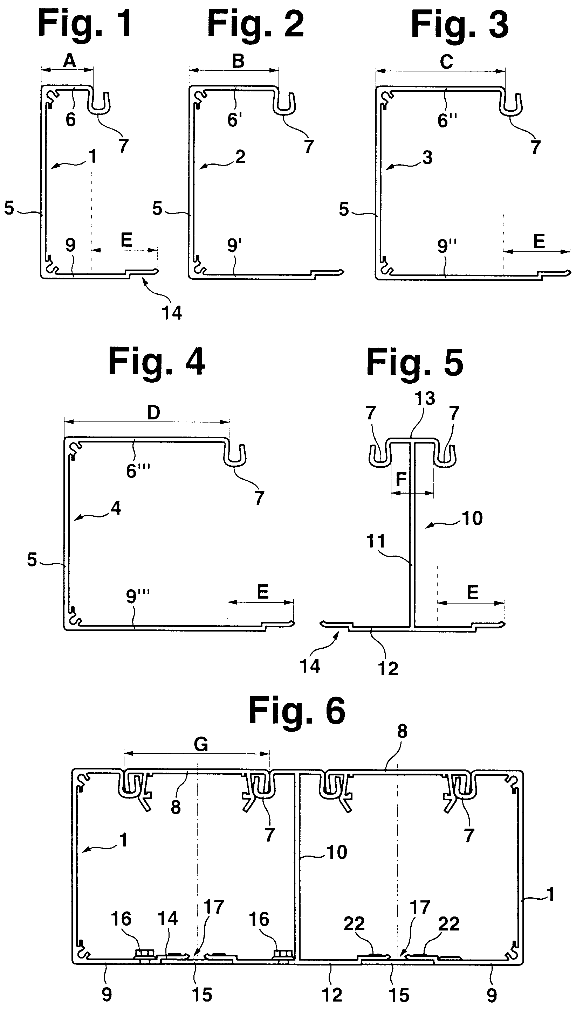

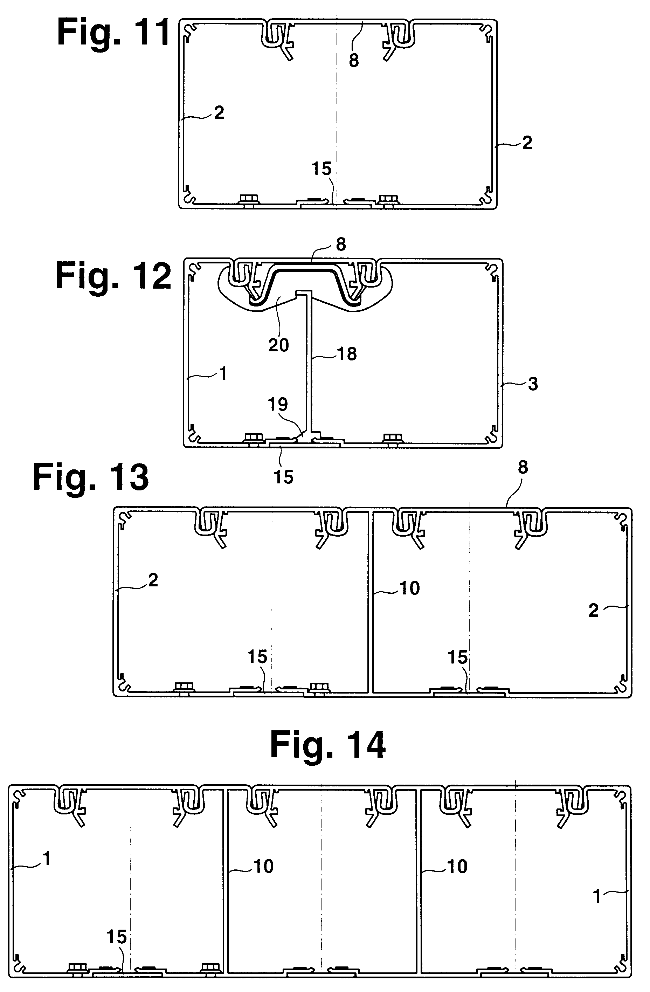

In den Figuren 1 bis 4 sind jeweils Teilprofile 1, 2, 3 bzw. 4 nach der Erfindung gezeigt, die alle in etwa C-förmig ausgebildet und mit einem später als Seitenwand dienenden Mittelteil 5 versehen sind. Das Teilprofil 1 nach Fig. 1 besitzt einen später mit einem aufgesetzten Deckel zu versehenden Vorderwandteil 6, der rechtwinklig von der Seitenwand 5 absteht und die Länge A aufweist. Dieser Vorderwandteil 6 geht dann in eine nach innen gebogene Rinne 7 über, die zur aufnahme des Randes eines Deckels 8 dient, wie er in den Figuren 6 bis 14 gezeigt ist. Der Bodenteil 9 steht ebenfalls senkrecht von der Seitenwand 5 ab und besitzt die Breite A plus E. Das gesamte Teilprofil 1 ist beim Ausführungsbeispiel aus Aluminium im Strangpreßverfahren hergestellt.

Das Teilprofil 2 nach Fig. 2 ist im wesentlichen gleich wie das Teilprofil 1 aufgebaut, nur daß es eine größere Breite B des Vorderwandteils 6' und demzufolge auch eine größere Breite des Bodenteiles 9' aufweist, die hier B plus E ist. Analog sind die in den Figuren 3 und 4 gezeigten Teilprofile 3 und 4 aufgebaut. Sie besitzen unterschiedliche Breiten C bzw. D des Vorderwandteiles 6'' bzw. 6'''. Die Bodenteile 9'' bzw. 9''' besitzen dann die Breite C plus E bzw. D plus E.

Die Fig. 5 zeigt ein Zwischenstück 10, das in der Art eine Doppel T ausgebildet ist und einen Wandteil 11 besitzt, dessen Höhe der Höhe der Seitenwände 5 entspricht. Am Fuß des Wandteiles 11 sind symmetrisch zu der Mittelebene der Wand 11 Bodenteile 12 vorgesehen, während sich von der Oberseite der Wand 11 aus ein Vorderwandteil 13 ebenfalls symmetrisch zur Wand 11 erstreckt, das außen jeweils in Rinnen 7 übergeht. Die Breite F des Vorderwandteiles 13 ist an den beiden Fußteilen 12 jeweils um das Maß 2E vergrößert. Die Bodenteile 12 weisen ebenso wie die Bodenteile 9, 9', 9'' und 9''' im Bereich der freien Kante eine Abwinklung 14 auf, auf deren Bedeutung noch eingegangen wird. Aus den Figuren 1 bis 5 ist jedenfalls erkennbar, daß bei allen Teilprofilen und auch bei dem Zwischenstück 10, die Vorderwandteile 6 bzw. 13 einem Bodenteil 9 bzw. 12 entsprechen, das jeweils um den Betrag E breiter als das zugeordnete Vorderwandteil ist.

Die Fig. 6 zeigt, daß man zwei der Teilprofile 1 und das Zwischenstück 10 jeweils durch das Einlegen von Laschen 15 in den abgewinkelten Teil 14 zu einem Doppelkanal zusammensetzen kann, der dann beispielsweise durch die Anordnung von Befestigungsschrauben 16 in bekannter Weise als Wandkanal an einer Wand befestigt werden kann. Es wird deutlich, daß die Breite der Laschen 15, die jeweils mit ihren Kanten an der Abwinklung 14 der Bodenteile 9 bzw. 12 anliegen, so bemessen ist, daß der zwischen den freien Enden der Bodenteile 9 bzw. 12 verbleibende Abstand 17 gerade so groß ist, daß die Rinnen 7 der Teilprofile 1 bzw. des Zwischenstückes 10 einen Abstand G - jeweils gemessen von der inneren Rinnenwand - aufweisen, welcher der üblicherweise genormten Breite des Deckels 8 entspricht, der in bekannter Weise in diese Rinnen 7 eingerastet werden kann.

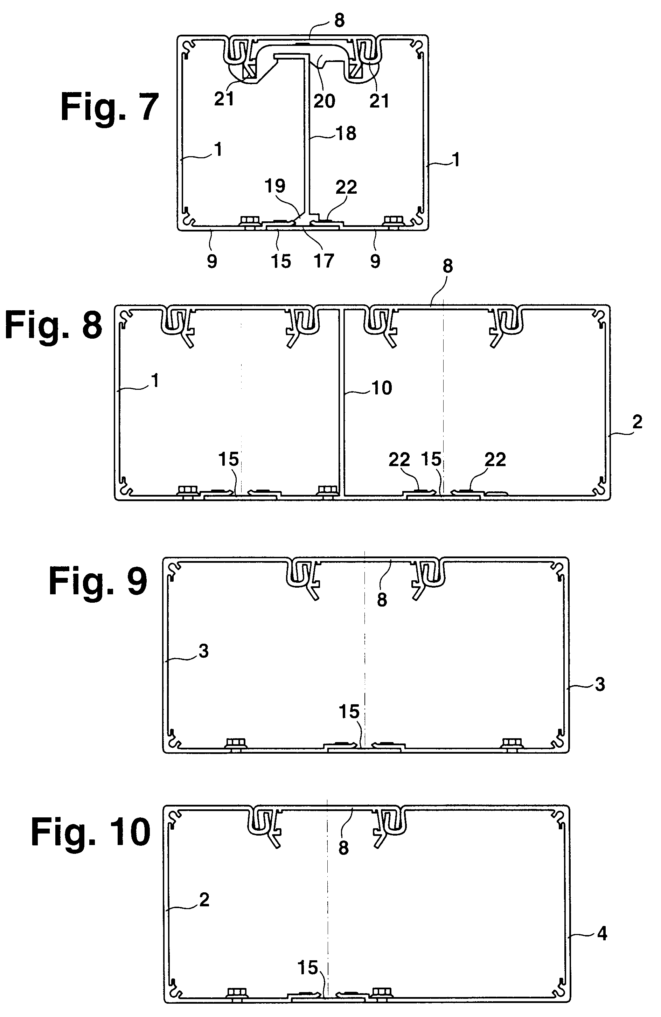

Die Figuren 7 bis 14 zeigen weitere Variationsmöglichkeiten für Wandkanäle. Natürlich lassen sich in analoger Weise auch andere Installationskanäle herstellen, wenn das gewünscht sein sollte.

Die Fig. 7 zeigt noch eine besondere Ausgestaltung insofern als hier eine Trennwand 18 mit einem entsprechend gestalteten Fuß 19 in den Zwischenraum 17 zwischen den freien Enden der Bodenteile 9 von zwei spiegelsymmetrisch zueinander angeordneten Teilprofilen 1 eingesetzt ist. Diese Trennwand 18 wird durch ein Bügelteil 20 in seiner in der Fig. 7 gezeigten Lage gehalten, das elastisch über entsprechende Schnappkanten 21 des Deckels 8 geschoben ist. Eine besondere Befestigung der Trennwand 18 ist somit nicht nötig, da ihr Fuß 19 formschlüssig in dem Zwischenraum 17 gehalten ist.

Die übrigen Figuren 8 bis 14 zeigen Ausgestaltungsmöglichkeiten für Installationskanäle, wie sie mit den in den Figuren 1 bis 5 gezeigten Einzelteilen wahlweise aufgebaut werden können. Die Verbindungslasche 15 wird bei allen Varianten in bekannter Weise mit den Bodenteilen verbunden, beispielsweise durch Nieten 22.

## Patentansprüche

1. Elektroinstallationskanal, insbesondere Wandkanal bestehend aus einem einseitig offenen und durch einen Deckel (8) verschließbaren Kanalprofil mit einem Boden als Rückwand sowie mit Seitenwänden, die mit parallel zum Boden verlaufenden und in Rinnen (7) zum Einsetzen des Deckels endenden Vorderwandteilen versehen sind, dadurch gekennzeichnet, daß das Kanalprofil aus mindestens zwei Teilprofilen (1, 2, 3, 4) aufgebaut ist, von denen jedes eine Seitenwand (5) sowie ein Teilstück (9, 9', 9'', 9''') der Rückwand und ein Teilstück (6, 6', 6'', 6''') der Vorderwand aufweist.

2. Elektroinstallationskanal nach Anspruch 1, dadurch gekennzeichnet, daß die Abmessungen (A, B, C, D) der als Boden ausgebildeten Rückwand (9) und der zugeordneten Vorderwandbereiche (6) so gewählt sind, daß beim Zusammensetzen von zwei Teilprofilen (1 bzw. 2, 3 oder 4) die an den Vorderwandteilen (6, 6', 6'', 6''') gebildeten Rinnen (7) jeweils im gleichen Abstand (G) zueinander angeordnet sind.

3. Elektroinstallationskanal nach Anspruch 2, dadurch gekennzeichnet, daß jeder Rückwandteil (9) um ein bestimmtes Maß (E) breiter ausgebildet ist als der zugeordnete Vorderwandteil (6) im Bereich vor den Rinnen (7).

4. Elektroinstallationskanal nach einem der Ansprüche 1 bis 3, dadurch gekennzeichnet, daß die Rückwandteile (9, 9', 9'', 9''') mit Hilfe von laschenartigen Verbindungsstreifen (15) zusammengefügt werden.

5. Elektroinstallationskanal nach Anspruch 4, dadurch gekennzeichnet, daß die Verbindungsstreifen (15) in Abkantungen (14) der Rückwandteile (9, 9', 9'', 9''') gehalten und in den Abkantungen befestigt sind.

6. Elektroinstallationskanal nach einem der Ansprüche 1 bis 5, dadurch gekennzeichnet, daß ein doppel-T-artiges Zwischenstück (10) vorgesehen ist, das eine Zwischenwand (11) gleicher Höhe wie die Seitenwände (5) besitzt und ein jeweils in Rinnen (7) auslaufendes Vorderwandteil (13), dem ein Rückwandteil (12) gegenüberliegt, das symmetrisch zur Zwischenwand (11) ausgebildet ist und auf jeder Seite jeweils um den Betrag (E) breiter ist als der zugeordnete Vorderwandteil, um den auch die Rückwandteile (9, 9', 9'', 9''') der Teilprofile (1, 2, 3 bzw. 4) breiter sind als deren Vorderwandteile (6, 6', 6'', 6''').

7. Elektroinstallationskanal nach einem der Ansprüche 1 bis 6, dadurch gekennzeichnet, daß die Verbindungsstreifen (15) eine solche Breite haben, daß zwischen den freien Enden der Rückwandteile (9, 9', 12) noch ein Zwischenraum (17) verbleibt, der zum Einsetzen des Fußes (19) einer Trennwand (18) ausgenützt werden kann.

8. Elektroinstallationskanal nach Anspruch 7, dadurch gekennzeichnet, daß die Trennwand (18) mit ihrem Fuß (19) formschlüssig in dem Zwischenraum (17) durch einen Federbügel (20) gehalten ist, der sich am Deckel (8) anlegt.
